# EUROPÄISCHE PATENTANMELDUNG

(11) **EP 0 909 663 A1**
(43) Veröffentlichungstag der Anmeldung: **21.04.1999**
(21) Anmeldenummer: 97117733.2
(22) Anmeldetag: 14.10.1997
(51) Int. Cl.: B60B 27/00

(54) **Radlager**

(71) Anmelder: BPW Bergische Achsen Kommanditgesellschaft, 51674 Wiehl (DE)
(72) Erfinder: Ebert, Jörg, Dr., 50858 Köln (DE); Leidig, Hans-Josef, 51580 Reichshof (DE)
(74) Vertreter: Stenger, Watzke & Ring Patentanwälte

(57) **Zusammenfassung**

Die Erfindung betrifft ein insbesondere für Anhängerachsen bestimmtes Radlager mit einer mittels eines vorderen und eines hinteren Wälzlagers (2,3) drehbar auf einem Achsschenkel (4) gelagerten Nabe (1), an der ein Bremselement (Bremstrommel oder Bremsscheibe) und ein Rad befestigbar sind und die mittels einer auf ein Gewinde (4.1) des Achsschenkels (4) aufschraubbaren Achsmutter (7) gemeinsam mit den Wälzlagern (2, 3) als Baueinheit auf den Achsschenkel (4) aufschiebbar sowie vom Achsschenkel (4) abziehbar ist. Um eine exakte axiale Positionierung der Nabe (1) auf dem Achsschenkel (4) mit geringen Fertigungskosten und hoher Präzision zu ermöglichen, ist die die axiale Lage der Nabe (1) auf dem Achsschenkel (4) bestimmende Anschlagfläche (4.6) für den Innenring (3.1) des hinteren Wälzlagers (3) als am Achsschenkel (4) angeformte Ringschulter (4.5) ausgebildet.

## Beschreibung

Die Erfindung betrifft ein insbesondere für Anhängerachsen bestimmtes Radlager mit einer mittels eines vorderen und eines hinteren Wälzlagers drehbare auf einem Achsschenkel gelagerten Nabe, an der ein Bremselement (Bremstrommel oder Bremsscheibe) und ein Rad befestigbar sind und die mittels einer auf ein Gewinde des Achsschenkels aufschraubbaren Achsmutter gemeinsam mit den Wälzlagern als Baueinheit auf den Achsschenkel aufschiebbar sowie vom Achsschenkel abziehbar ist, wozu die Achsmutter an die vordere Stirnfläche des Innenringes des vorderen Wälzlagers anlegbar und drehbar, jedoch in Abziehrichtung unverschiebbar mit der Nabe verbunden ist und die hintere Stirnfläche des Innenringes des hinteren Wälzlagers mittels einer radial verlaufenden Anschlagfläche auf dem Achsschenkel positionierbar und drehbar, jedoch in Abziehrichtung unverschiebbar mit der Nabe verbunden ist.

Ein derartiges Radlager ist aus der DE 39 22 858 C2 bekannt. Es hat gegenüber dem vorbekannten Stand der Technik den großen Vorteil, daß die Nabe, die beiden Wälzlager und die Achsmutter sowie eventuelle Dichtungs- und Kupplungselemente vormontiert eine Baueinheit bilden, die gemeinsam mit einem an der Nabe befestigten Bremselement und einem Rad mit Hilfe der Achsmutter sowohl auf den Achsschenkel aufgeschoben, in die richtige Position gebracht und dort festgelegt werden als auch, insbesondere zum Wechsel der Bremsbeläge und/oder Bremselemente, vom Achsschenkel abgezogen werden kann. Die Achsmutter dient somit als Montage- und Abziehwerkzeug, so daß insbesondere auf spezielle Abziehvorrichtungen verzichtet werden kann. Da es nicht erforderlich ist, vor dem Abziehen der Nabe das Rad und das Bremselement abzunehmen, ergibt sich ein besonders schneller und einfacher Wechsel insbesondere der Bremsbeläge.

Bei der bekannten Konstruktion erfolgt die Positionierung der die beiden Wälzlager enthaltenden Nabe in axialer Richtung auf dem Achsschenkel mittels eines sogenannten Stoßringes, an dessen radialer Anschlagfläche die hintere Stirnfläche des Innenringes des hinteren Wälzlagers anliegt und der mit einer konischen Bohrung versehen ist, die auf eine konische Sitzfläche des Achsschenkels aufgeschoben wird. Diese konische Sitzfläche schließt sich an die zylindrische Lagerfläche für den Innenring des hinteren Wälzlagers an. Der Stoßring dient bei dem bekannten Radlager zugleich als Kupplungselement, das drehbar, jedoch in Abziehrichtung unverschiebbar mit der Nabe verbunden ist.

Durch die Ausbildung einer konischen Sitzfläche zwischen Stoßring und Achsschenkel läßt sich auch bei sehr präziser Fertigung keine eindeutige Positionierung der Nabe in axialer Richtung auf dem Achsschenkel erzielen. Außerdem erfordert die Herstellung der konischen Sitzflächen und deren exakte Übereinstimmung eine hohe Präzision und damit kostspielige Bearbeitung.

Der Erfindung liegt die **Aufgabe** zugrunde, das Radlager der eingangs beschriebenen Art derart weiterzubilden, daß auf eine kostspielige Herstellung konischer Sitzflächen für die Positionierung der Nabe in axialer Richtung auf dem Achsschenkel verzichtet werden kann und mit geringerem Aufwand eine exakte Positionierung erreicht wird.

Die **Lösung** dieser Aufgabenstellung durch die Erfindung ist dadurch gekennzeichnet, daß die die axiale Lage der Nabe auf dem Achsschenkel bestimmende Anschlagfläche für den Innenring des hinteren Wälzlagers als am Achsschenkel angeformte Ringschulter ausgebildet ist.

Mit dieser erfindungsgemäßen Ausbildung der Anschlagfläche als am Achsschenkel angeformte Ringschulter wird nicht nur der bisher erforderliche Stoßring entbehrlich, es entfallen auch die zur Positionierung des Stoßringes auf dem Achsschenkel bisher erforderlichen konischen Sitzflächen. Insgesamt wird somit eine Konstruktions- und Fertigungsvereinfachung erzielt, die darüber hinaus mit einer exakteren Positionierung der Nabe in axialer Richtung auf dem Achsschenkel verbunden ist.

Um die im Achsschenkel im kritischen Übergang zwischen dem Sitz des hinteren Wälzlagers und dem Achskörper, der nicht nur einen kreisförmigen, sondern auch einen Vierkantquerschnitt haben kann, auftretenden Spannungen zu reduzieren, geht gemäß einem weiteren Merkmal der Erfindung das radial innenliegende Ende der Ringschulter mittels einer ringförmigen, die Ringschulter unterschneidenden Entlastungsnut in den zylindrischen Lagersitz für den Innenring des hinteren Wälzlagers über. Außerdem kann gemäß einem weiteren Merkmal der Erfindung das radial außenliegende Ende der Ringschulter mittels einer ausgerundeten Entlastungskerbe in die Mantelfläche des Achsschenkels übergeben. Mit dieser erfindungsgemäßen Weiterbildung werden Spannungsspitzen und Kerbwirkungen im Material des Achsschenkels vermieden.

Um beim Abziehen der Nabe mittels der Achsmutter den Innenring des hinteren Wälzlagers zuverlässig mitzunehmen, ist gemäß einem weiteren Merkmal der Erfindung zwischen der Ringschulter und dem Innenring des hinteren Wälzlagers ein bis nahe an die Innenkontur der Nabe reichender Mitnahmering angeordnet, der auf geeignete Weise drehbar, jedoch in Ausziehrichtung unverschiebbar mit der Nabe verbunden wird, beispielsweise mittels eines in die Nabe eingesetzten Sprengringes.

Schließlich wird mit der Erfindung vorgeschlagen, die Nabe mit einem bis in den Bereich des Innenringes des vorderen Wälzlagers radial nach innen ragenden Flanschring zu versehen, so daß auch der Innenring des vorderen Wälzlagers beim Abziehen der Habe zuverlässig vom zugehörigen Lagersitz auf dem Achsschenkel abgezogen wird, ohne daß es hierfür eines zusätzlichen Bauteiles bedarf.

Auf der Zeichnung ist ein Ausführungsbeispiel des erfindungsgemäßen Radlagers dargestellt, und zwar zeigen:
- Figur 1: einen Längsschnitt durch die obere Hälfte einer auf einem Achsschenkel montierten Nabe und
- Figur 2: eine teilweise geschnittene Ansicht des Achsschenkels.

Das anhand eines Ausführungsbeispiels dargestellte Radlager umfaßt eine Nabe 1, die mit einem Befestigungsflansch 1.1 für ein auf der Zeichnung nicht dargestelltes Bremselement sowie für ein Rad versehen ist. Beim Bremselement kann es sich um eine Bremstrommel oder eine Bremsscheibe handeln.

Im Inneren der Nabe 1 sind zwei Wälzlager 2 und 3 angeordnet, die beim Ausführungsbeispiel als Kegelrollenlager mit unterschiedlichen Durchmessern ausgebildet sind. Das vordere Wälzlager 2 hat einen kleineren Durchmesser als das hintere Wälzlager 3. Beide Wälzlager 2 und 3 bestehen jeweils aus einem Innenring 2.1 bzw. 3.1, einem Außenring 2.2 bzw. 3.2 und Kegelrollen 2.3 bzw. 3.3, die jeweils durch einen Käfig 2.4 bzw. 3.4 gehalten sind.

Die Innenringe 2.1 und 3.1 der beiden Wälzlager 2 und 3 sitzen jeweils auf einem zylindrischen Lagersitz 4.2 bzw. 4.3 eines Achsschenkels 4, der an seinem vorderen Ende mit einem Außengewindeabschnitt 4.1 versehen ist. Beim Ausführungsbeispiel bildet das hintere Ende des Achsschenkels 4 ein Formstück 4.4 mit viereckiger Außenkontur, das in einen auf der Zeichnung nicht dargestellten Vierkantachskörper eingesetzt werden kann. Selbstverständlich kann der Achsschenkel 4 auch einstückig mit dem Achskörper ausgeführt sein. Der Achskörper kann auch einen kreisförmigen Querschnitt aufweisen.

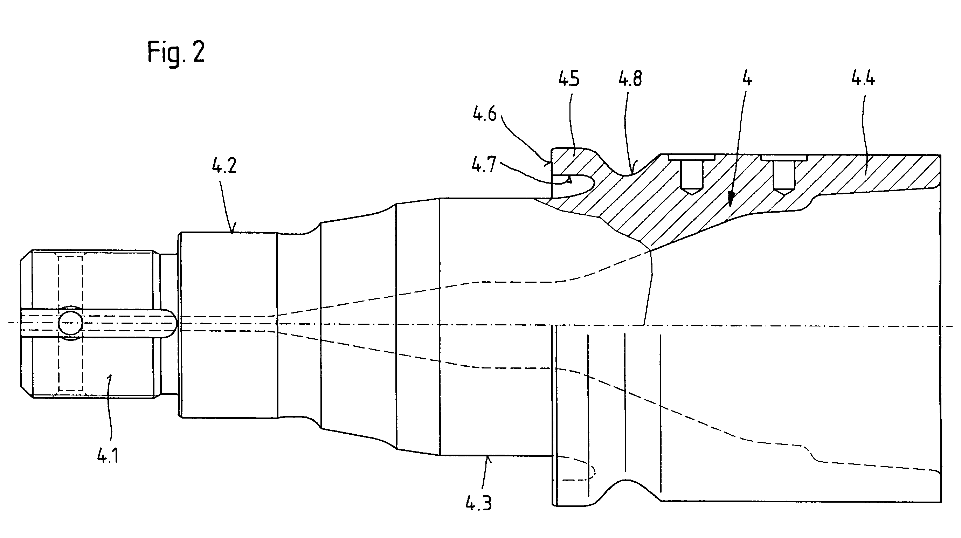

Um die mit den Wälzlagern 2 und 3 versehene Nabe 1 in axialer Richtung definiert auf dem Achsschenkel 4 zu positionieren, ist an den Achsschenkel 4 eine Ringschulter 4.5 angeformt, die - wie insbesondere aus Figur 2 ersichtlich - eine radial verlaufende, ringförmige Anschlagfläche 4.6 für den Innenring 3.1 des hinteren Wälzlagers 3 bildet. Zwischen der hinteren Stirnfläche des Innenrings 3.1 und der Anschlagfläche 4.6 der Ringschulter 4.5 ist ein Mitnahmering 5 angeordnet, der beim Ausführungsbeispiel einen Z-förmigen Querschnitt hat und einen Dichtungsring 6 trägt. Der Mitnahmering 5 reicht bis dicht an die Innenbohrung der Nabe 1 heran und wird durch ein Verbindungselement 12, das beim Ausführungsbeispiel als Sprengring ausgebildet ist, drehbar mit der Nabe 1 verbunden.

Um das Auftreten von Spannungsspitzen sowie von Kerbwirkungen im Material des Achsschenkels 4 durch die angeformte Ringschulter 4.5 zu vermeiden, geht das radial innenliegende Ende der Ringschulter 4.5 mittels einer ringförmigen, die Ringschulter 4.5 unterschneidenden Entlastungsnut 4.7 in den zylindrischen Lagersitz 4.3 für den Innenring 3.1 des hinteren Wälzlagers 3 über. Außerdem ist zwischen der Ringschulter 4.5 und der sich anschließenden Mantelfläche des Achsschenkels 4 eine ausgerundete Entlastungskerbe 4.8 vorgesehen, so daß das Spannungsniveau des Achsschenkels 4 im kritischen Übergang vom Lagersitz 4.3 zum Formstück 4.4 niedriger liegt als bei der bekannten Ausführung mit einem separaten Stoßring.

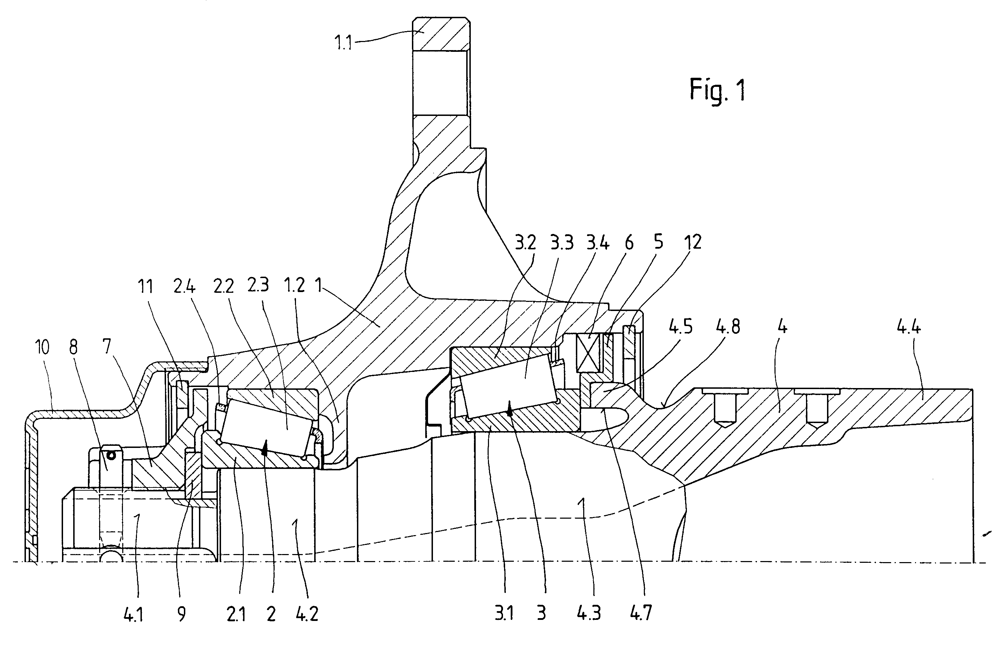

Die Positionierung und Halterung der mit den beiden Wälzlagern 2 und 3 versehenen Nabe 1 auf dem Achsschenkel 4 geschieht mit Hilfe einer Achsmutter 7, die auf den Außengewindeabschnitt 4.1 des Achsschenkels 4 aufgeschraubt und durch einen Sicherungsstift 8 gegen Verdrehen geschützt wird. Beim Ausführungsbeispiel ist zwischen der Achsmutter 7 und dem Innenring 2.1 des vorderen Wälzlagers 2 eine Druckscheibe 9 angeordnet, die mit einer Nase in eine Nut im Außengewindeabschnitt 4.1 des Achsschenkels 4 hineinragt und auf diese Weise unverdrehbar am Achsschenkel 4 gehalten wird. Das Innere der Nabe 1 wird durch eine Achskappe 10 abgedeckt, die auf einen Gewindeabschnitt der Nabe 1 aufgeschraubt ist, wie Figur 1 erkennen läßt.

Um die mit einem auf der Zeichnung nicht dargestellten Rad und einem ebenfalls auf der Zeichnung nicht dargestellten Bremselement, insbesondere einer Bremstrommel versehene Nabe 1 vom Achsschenkel 4 abzuziehen, beispielsweise um verschlissene Bremsbeläge auszutauschen, wird nach Abschrauben der Achskappe 10 und Entfernen des Sicherungsstiftes 8 die Achsmutter 7 gedreht. Sie nimmt hierbei über ein vorderes Verbindungselement 11, das beim dargestellten Ausführungsbeispiel als Sprengring ausgeführt ist, die Nabe 1 mit, und zwar einschließlich des vorderen Wälzlagers 2. Um auch den Innenring 2.1 des Wälzlagers 2 zuverlässig mitzunehmen, ist die Nabe 1 beim Ausführungsbeispiel mit einem bis in den Bereich dieses Innenringes 2.1 des vorderen Wälzlagers 2 radial nach innen ragenden Flanschring 1.2 versehen. Das hintere Wälzlager 3 wird beim Abziehen der Nabe 1 über den Mitnahmering 5 durch das hintere Verbindungselement 12 mitgenommen, das beim Ausführungsbeispiel ebenfalls ein Sprengring ist. Allein durch Drehen der Achsmutter 7 kann auf diese Weise die komplette Nabe 1 einschließlich Rad und Bremstrommel vom Achsschenkel 4 abgezogen werden.

Auch das Aufschieben der Nabe 1 auf den Achsschenkel 4 geschieht allein mit Hilfe der Achsmutter 7. Es ist lediglich erforderlich, die Nabe 1 mit den vormontierten Wälzlagern 2 und 3 und der durch das Verbindungselement 11 in der Nabe gehaltenen Achsmutter 7 soweit auf den Achsschenkel 4 aufzuschieben, daß die Achsmutter 7 in das Gewinde des Außengewindeabschnittes 4.1 eingreift. Ein anschließendes Drehen der Achsmutter 7 sorgt für ein zuverlässiges Aufschieben der Wälzlager 2 und 3 auf die Lagersitze 4.2 und 4.3 des Achsschenkels 4 bis die Nabe 1 ihre exakte Position auf dem Achsschenkel 4 erreicht hat, in der die hintere Stirnfläche des Innenringes 3.1 des hinteren Wälzlagers 3 über den Mitnahmering 5 an der Anschlagfläche 4.6 der Ringschulter 4.5 anliegt.

### Bezugszeichenliste

- 1: Nabe
- 1.1: Befestigungsflansch
- 1.2: Flanschring
- 2: Wälzlager, vorderes
- 2.1: Innenring
- 2.2: Außenring
- 2.3: Kegelrolle
- 2.4: Käfig
- 3: Wälzlager, hinteres
- 3.1: Innenring
- 3.2: Außenring
- 3.3: Kegelrolle
- 3.4: Käfig
- 4: Achsschenkel
- 4.1: Außengewindeabschnitt
- 4.2: Lagersitz
- 4.3: Lagersitz
- 4.4: Formstück
- 4.5: Ringschulter
- 4.6: Anschlagfläche
- 4.7: Entlastungsnut
- 4.8: Entlastungskerbe
- 5: Mitnahmering
- 6: Dichtungsring
- 7: Achsmutter
- 8: Sicherungsstift
- 9: Druckscheibe
- 10: Achskappe
- 11: Verbindungselement, vorderes
- 12: Verbindungselement, hinteres

## Patentansprüche

1. Radlager, insbesondere für Anhängerachsen, mit einer mittels eines vorderen und eines hinteren Wälzlagers (2, 3) drehbar auf einem Achsschenkel (4) gelagerten Nabe, an der ein Bremselement (Bremstrommel oder Bremsscheibe) und ein Rad befestigbar sind und die mittels einer auf ein Gewinde (4.1) des Achsschenkels (4) aufschraubbaren Achsmutter (7) gemeinsam mit den Wälzlagern (2, 3) als Baueinheit auf den Achsschenkel (4) aufschiebbar sowie vom Achsschenkel (4) abziehbar ist, wozu die Achsmutter (7) an die vordere Stirnfläche des Innenringes (2.1) des vorderen Wälzlagers (2) anlegbar und drehbar, jedoch in Abziehrichtung unverschiebbar mit der Nabe (1) verbunden ist und die hintere Stirnfläche des Innenringes (3.1) des hinteren Wälzlagers (3) mittels einer radial verlaufenden Anschlagfläche (4.6) auf dem Achsschenkel (4) positionierbar und drehbar, jedoch in Abziehrichtung unverschiebbar mit der Nabe (1) verbunden ist,
**dadurch gekennzeichnet,**
daß die die axiale Lage der Nabe (1) auf dem Achsschenkel (4) bestimmende Anschlagfläche (4.6) für den Innenring (3.1) des hinteren Wälzlagers (3) als am Achsschenkel (4) angeformte Ringschulter (4.5) ausgebildet ist.

2. Radlager nach Anspruch 1, dadurch gekennzeichnet, daß das radial innenliegende Ende der Ringschulter (4.5) mittels einer ringförmigen, die Ringschulter (4.5) unterschneidenden Entlastungsnut (4.7) in den zylindrischen Lagersitz (4.3) für den Innenring (3.1) des hinteren Wälzlagers (3) übergeht.

3. Radlager nach Anspruch 1 oder 2, dadurch gekennzeichnet, daß das radial außenliegende Ende der Ringschulter (4.5) mittels einer ausgerundeten Entlastungskerbe (4.8) in die Mantelfläche des Achsschenkels (4) übergeht.

4. Radlager nach mindestens einem der Ansprüche 1 bis 3, dadurch gekennzeichnet, daß zwischen der Ringschulter (4.5) und dem Innenring (3.1) des hinteren Wälzlagers (3) ein bis nahe an die Innenkontur der Nabe (1) reichender Mitnahmering (5) angeordnet ist.

5. Radlager nach mindestens einem der Ansprüche 1 bis 4, dadurch gekennzeichnet, daß die Nabe (1) mit einem bis in den Bereich des Innenringes (2.1) des vorderen Wälslagers (2) radial nach innen ragenden Flanschring (1.2) versehen ist.
